# EUROPÄISCHE PATENTSCHRIFT

(11) **EP 1 893 452 B1**
(45) Veröffentlichungstag und Bekanntmachung des Hinweises auf die Patenterteilung: **13.01.2010**
(21) Anmeldenummer: 06755112.7
(22) Anmeldetag: 09.05.2006
(51) Int. Cl.: B60R 21/13

(54) **VORRICHTUNG ZUR AUFPRALLERKENNUNG**
COLLISION DETECTING DEVICE
DISPOSITIF POUR LA DETECTION D'IMPACT

(30) Priorität: 10.06.2005 DE 102005026987
(43) Veröffentlichungstag der Anmeldung: 05.03.2008
(73) Patentinhaber: ROBERT BOSCH GMBH, 70442 Stuttgart (DE)
(72) Erfinder: MATTES, Bernhard, 74343 Sachsenheim (DE); DUKART, Anton, 70839 Gerlingen (DE); GROEGER, Ulrike, Farmington Hills, Michigan 48331 (US); MACK, Frank, 70376 Stuttgart (DE); STEINKOGLER, Sascha, 79106 Freiburg (DE); WALTHER, Ralf, 71638 Ludwigsburg (DE)
(86) Internationale Anmeldenummer: PCT/EP2006/062173
(87) Internationale Veröffentlichungsnummer: WO 2006/131432

(56) Entgegenhaltungen:
- EP-A- 0 914 992
- WO-A-2004/058545
- US-A1- 2004 032 322
- US-A1- 2005 099 278

## Beschreibung

### Stand der Technik

Die Erfindung geht aus von einer Vorrichtung zur Aufprallerkennung nach der Gattung des unabhängigen Patentanspruchs.

Aus DE 103 34 699 A1 ist bereits eine Vorrichtung zur Betätigung einer Vorrichtung zum Schutz eines Fußgänger bekannt. Dabei wird als Unfallsensorik ein Kontaktsensor verwendet. Die Schwelle für das Signal des Kontaktsensors wird dabei in Abhängigkeit vom Signal der Precrashsensorik verändert.

Aus US 2004/0,032,322 A1 ist es bekannt, einen Temperatursensor und einen Beschleunigungssensor in einer strukturellen Einheit für einen Seitenaufprall zu verwenden. Dabei können sich die Sensorsignale gegenseitig plausibilisieren. Aus WO 2004/058545 A1 ist ein Aufpralldetektor für den Fußgängerschutz bekannt, bei dem Beschleunigungssignale neben anderen Signalen ausgewertet werden können, und auch die Bewegungstemperatur berücksichtigt wird und zwar im Hinblick auf den Schaum im Stoßfänger. Aus der Härte des Schaums kann die Masse des Aufprallobjekts bestimmt werden Nur wenn die Masse des Aufprallobjekts über einem bestimmten Schwellwert liegt, dann können die Sensorsignale vom Fußgängerschutzalgorithmus verarbeitet werden.

### Vorteile der Erfindung

Die erfindungsgemäße Vorrichtung zur Aufprallerkennung mit den Merkmalen des unabhängigen Patentanspruchs hat demgegenüber Vorteile. Es ist bekannt, dass die Umgebungstemperatur bei der Beurteilung des Signals der Unfallsensorik berücksichtigt wird. Unfallsensoren zur Erfassung eines Fußgängeraufpralls sind beispielsweise an der Außenhaut eines Fahrzeugs angeordnet, wobei die Steifigkeit der Außenhautkomponenten, die zum Teil aus Schaumstoff bestehen, einen Temperaturgang aufweisen können. Dieser Temperaturgang wird durch die Verwendung der Umgebungstemperatur bei der Aufprallcharakterisierung in Abhängigkeit von dem Signals der Unfallsensorik berücksichtigt. Die Aufprallcharakterisierung umfasst beispielsweise die Crashschwere und/oder den Crashtyp. Damit ist insgesamt eine sichere und genauere Unterscheidung der Fußgänger von anderen Objekten auch unter extremen Temperaturbedingungen möglich. Dies führt zu einer sichereren und robusteren Ansteuerung der Schutzmittel für Fußgänger. Dadurch wird auf der einen Seite das Schutzniveau für Fußgänger erhöht und auf der anderen Seite die Kosten, die durch eine ungewollte Auslösung entstehen können, eingespart. Außerdem wird es verhindert, dass der Fahrer durch eine Auslösung von Schutzmitteln, zum Beispiel durch die Aufstellung der Fronthaube irritiert und in seinem Lenkverhalten beeinträchtigt wird.

Die bei einem Objektaufprall auf ein Fahrzeug auftretenden Sensorsignale hängen in der Regel mehr oder weniger stark von der Temperatur ab. Die Ursache hierfür ist eine temperaturbedingte Änderung der Steifigkeit der einzelnen Bestandteile der Fahrzeugfront. Insbesondere Sensoren, die in einem Schaumstoff verbaut sind, erfahren stark unterschiedliche Signale, da übliche Schaumstoffe einen sehr starken Temperaturgang aufweisen. Bei Beschleunigungssensoren, die in der Stossfängerverkleidung eingebaut sind, ist dieser Temperatureinfluss alleine durch den Einbauort deutlich reduziert, da hier der Schaumstoff keinen Kontakt zu den Sensoren hat und somit praktisch keinen Einfluss auf die Signalform aufweist. Jedoch ist selbst in dieser ausgezeichneten Einbauposition eine gewisse Temperaturabhängigkeit des Signals zu beobachten, bedingt beispielsweise durch den Temperatureinfluss auf die Stossfängerverkleidung. Aufgrund der unterschiedlichen Signalform kann es unter umständen schwer fallen, menschenähnliche Gegenstände von Menschen zu trennen. Wird die Information eines Temperatursensors für die Umgebungstemperatur über die Auslöseentscheidung mit einbezogen, so kann in diesen Fällen die Auslöseentscheidung verbessert werden. In der Regel werden für die Objektklassifikation bestimmte Merkmale, zum Beispiel das erste Integral der Beschleunigung oder das erste Integral des Absolutwerts der Beschleunigung, berechnet und diese dann mit Schwellwerten verglichen.

Erfindungskennzeichnend ist, dass der Schwellwert, mit dem das Signal der Unfallsensorik verglichen wird, in Abhängigkeit von der Umgebungstemperatur verändert wird. Damit gelingt eine Adaption des Schwellwerts an die Umgebungstemperatur, wobei Daten, die vorher in Versuchen ermittelt wurden, berücksichtigt werden, um eine sichere Ansteuerung der Schutzmittel zu erreichen.

Durch die in den abhängigen Ansprüchen aufgeführten Maßnahmen und Weiterbildungen sind vorteilhafte Verbesserungen der im unabhängigen Patentanspruch angegebenen Vorrichtung zur Aufprallerkennung möglich.

Diese Adaption kann insbesondere durch eine nichtlineare Abbildung in Abhängigkeit von der Temperatur durchgeführt werden, insbesondere durch ein Absenken oder Erhöhen mittels eines temperaturabhängigen Faktors oder durch Addition bzw. Subtraktion eines temperaturabhängigen Wertes. Alternativ ist es möglich, dass Schwellwerte aus einer Look-Up-Tabelle ausgelesen werden, bei der eine Dimension der Tabelle durch die Temperatur bzw. Temperaturklasse gegeben ist.

Weiterhin ist es vorteilhaft, dass das Signal selbst durch eine temperaturabhängige nicht lineare Funktion modifiziert werden kann, insbesondere durch eine Skalierung des Signals bezüglich der Amplitude und/oder Zeitskala, bevor daraus Merkmale berechnet werden, aus denen dann das Objekt oder die Unfallschwere klassifiziert wird. Weiterhin ist es möglich, dass das Signal dahingehend modifiziert wird, dass es um einen temperaturabhängigen Summanden ergänzt wird.

Eine weitere Alternative ist, dass temperaturabhängig die Berechnungsvorschrift für Merkmale verändert wird. Beispielsweise wenn aus dem Beschleunigungssignal ein Integral gebildet wird, ist das Integral das Merkmal, und diese Berechnungsvorschrift kann durch temperaturabhängige Integrationsgrenzen oder Integrationsfenster oder Filter mit temperaturabhängigen Koeffizienten beeinflusst werden.

Weiterhin ist es möglich, eine Fuzzy-Logik zur Klassifikation einzusetzen, wobei dabei eine Größe temperaturabhängig oder die Temperatur selber ist. Die Fuzzy-Logik ist regelbasiert, d.h. eine Entscheidung wird getroffen, wenn bestimmte vorgegebene Regeln erfüllt sind. Zum Beispiel ist bei einem großen Integrationswert und einer hohen Temperatur von einem Fußgängeraufprall auszugehen, wobei die Regeln hier sind: großer Integrationswert und hohe Temperatur.

Weiterhin ist es möglich, dass eine Rauschschwelle für das Signal beispielsweise die Beschleunigung in Abhängigkeit von der Temperatur verändert wird. Auch hier kann eine nichtlineare Veränderung, insbesondere durch einen Faktor oder durch einen Summanden vorgenommen werden, oder die Rauschschwelle kann temperaturabhängig ausgewählt werden, wiederum durch eine Look-Up-Tabelle. Es ist einem Fachmann klar, dass die hier dargestellten Konfigurationen auch beliebig miteinander kombiniert werden können. Insbesondere ist es möglich, dass die Entscheidung, ob ein relevanter Aufprall vorliegt, der zur Auslösung von Schutzmitteln führt, nach einer bestimmten Zeitdauer nach Überschreiten der Rauschschwelle getroffen wird. Diese Zeitdauer kann ebenfalls temperaturabhängig verändert werden.

Weiterhin ist es möglich auch Plausibilisierungssignale, die einer Schwellwertentscheidung unterzogen werden, temperaturabhängig zu beeinflussen. Auch hierbei können die Signale selbst oder die Schwellwerte temperaturabhängig modifiziert werden.

Vorteilhafterweise ist die erfindungsgemäße Vorrichtung als Fußgängerschutzsensorik ausgebildet. Sie kann dabei mit dem Steuergerät zur Ansteuerung von Personenschutzmittel koppelbar sein, um Signale diesem Steuergerät zur Verfügung zu stellen, sodass auch Airbags und Gurtstraffer innerhalb der Fahrgastzelle in verbesserter Art und Weise angesteuert werden können. Vorzugsweise ist die Unfallsensorik eine Beschleunigungssensorik, die in der Stossfängerverkleidung eingebaut ist. Dabei kann auch ein Temperatursensor oder -sensorik im Bereich der Stossfängerverkleidung vorgesehen sein, vorzugsweise auf der gleichen Platine mit der Beschleunigungssensorik.

### Zeichnung

Ausführungsbeispiele sind in der Zeichnung dargestellt und werden in der nachfolgenden Beschreibung näher erläutert.

Es zeigen
Figur 1 ein Blockschaltbild der erfindungsgemäßen Vorrichtung,
Figur 2 ein Beschleunigungszeitdiagramm,
Figur 3 ein erstes Ausführungsbeispiel der erfindungsgemäßen Vorrichtung,
Figur 4 ein zweites Ausführungsbeispiel der erfindungsgemäßen Vorrichtung,
Figur 5 ein drittes Ausführungsbeispiel der erfindungsgemäßen Vorrichtung,
Figur 6 ein viertes Ausführungsbeispiel der erfindungsgemäßen Vorrichtung und
Figur 7 ein fünftes Ausführungsbeispiel der erfindungsgemäßen Vorrichtung.

### Beschreibung

Zunehmend werden Fußgängerschutzmaßnahmen am Fahrzeug vorgesehen. Dabei kann das Fahrzeug selbst passiv so ausgebildet werden, dass bei einem Fußgängeraufprall der Fußgänger nur innerhalb der gemäß EU Gesetzgebung vorgegebenen Verletzung verletzt werden kann. Dabei sind auch aktive Lösungen vorgeschlagen worden, bei denen mittels einer Sensorik der Fußgängeraufprall erkannt wird und Schutzmittel wie Außenairbags an den A-Säulen oder das Anheben der Fronthaube die benötigte Knautschzone für den Fußgänger schaffen.

Für die Sensorik wurden verschiedenste Sensorprinzipien vorgeschlagen. Dazu gehören auch Beschleunigungssensoren, wobei die Erfindung nicht im Einsatz von Beschleunigungssensoren beschränkt ist Erfindungsgemäß wird nämlich das Signal der Unfallsensorik also beispielsweise Beschleunigungssensoren unter Berücksichtigung der Umgebungstemperatur beurteilt.

Neben Beschleunigungssensoren in Stossfängern können die Beschleunigungssensoren auch an Querträgern oder andere Sensoren wie beispielsweise Klopfsensoren oder Lichtwellenleiter können verwendet werden. Weiterhin ist es möglich mit den FuBgängersensoren Informationen zum Beispiel der Start der Kollision, Offset, Crashschwere, Relativgeschwindigkeit für die Crashsensierung als Zusatznutzen zu ermitteln und dem Airbagsteuergerät bzw. Airbagauslösealgorihmus für die Auslöseentscheidung der Insassenschutanittel zur Verfügung zu stellen. Auch bei der Erzeugung dieser Information kann die Temperaturinformation benutzt werden, beispielsweise durch Verwendung einiger oder aller der oben beschriebenen Methoden. Weiterhin ist es möglich, die erfindungsgemäße Vorrichtung für die Crashsensierung zum Beispiel für einen Seitencrash zu verwenden.

Da in der Regel eine grobe Temperaturinformation für die beschriebene Vorrichtung ausreicht, ist es möglich im oder am Fahrzeug vorhandene Temperatucsensoren zu verwenden, wie sie beispielsweise schon für die Bestimmung der Außentemperatur verwendet werden. Hier entstehen keine zusätzlichen Kosten für den Temperatursensor. Ist man bereit, diese Kosten zu tragen, so kann man mit einem Temperatursensor möglichst nah an den Elementen bzw. Stellen, deren Temperatureinfluss auf die Signale den größten Einfluss besitzt, zum Beispiel den Stoßfänger, noch bessere Ergebnisse erzielen. In manchen Formen von Bescheunigungssensoren oder anderen Sensoren ist auch ein Temperatursensor bereits vorhanden.

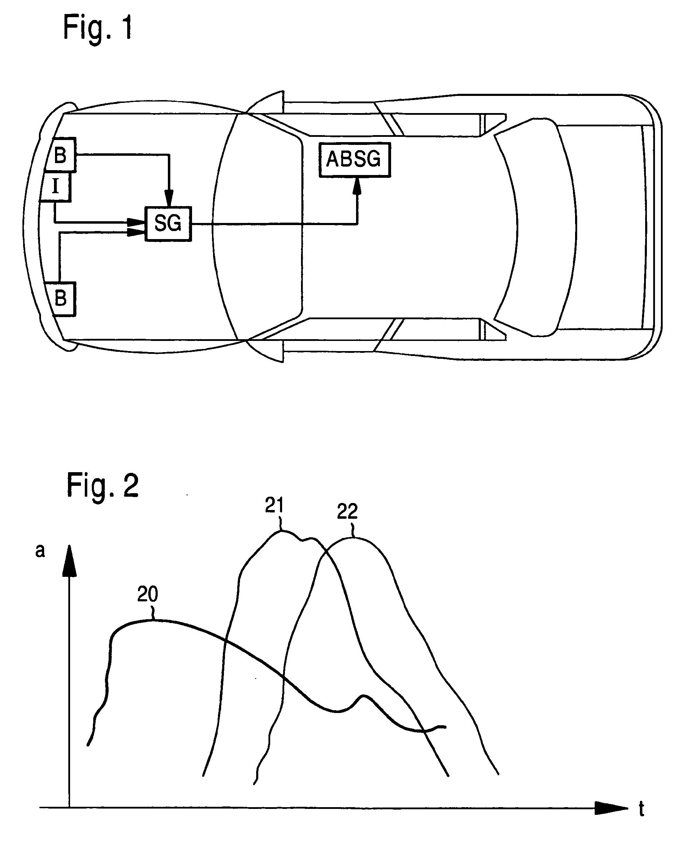

Figur 1 zeigt ein Blockschaltbild der erfindungsgemäßen Vorrichtung. In einem Fahrzeug 10 sind an der Stossfängerverkleidung symmetrisch zur Mitte jeweils zwei Beschleunigungssensoren angeordnet, wobei bei einem Beschleunigungssensor auch ein Temperatursensor T zugeordnet ist. Die Beschleunigungssensoren B und der Temperatursensor T sind an ein Steuergerät SG angeschlossen, das deren Signale verarbeitet und in Abhängigkeit davon gegebenenfalls Schutzmittel für den Fußgänger wie den Außenairbag auslöst, die hier der Einfachheit halber in der Zeichnung weggelassen wurden. Das Steuergerät ist jedoch beispielsweise über einen Bus wie den CAN-Bus oder eine Punkt-zu-Punkt - Verbindung mit einem Airbagsteuergerät ABSG verbunden. Damit können die Daten, die das Steuergerät SG ermittelt, auch dem Airbagsteuergerät ABSG zugeführt werden, sodass damit die Auslösung von Insassenschutzmitteln verbessert wird.

Figur 2 erläutert schematisch in einem Beschleunigungszeitdiagrarrim den Einfluss der Temperatur auf die Beschleunigungssignale. Die Kurve 20 zeigt das Signal bei minus 20° C, die Kurve 21 bei 20° C und die Kurve 22 bei 50° C. Es zeigt sich ein deutlicher Unterschied in der ermittelten Verzögerung, so dass beispielsweise bei niedrigeren Temperaturen Schwellwerte nicht erreicht werden, die bei höheren Temperaturen erreicht werden. Dies wird erfindungsgemäß durch die Adaption der Schwellwerte bzw. Signale bzw. Signalerzeugung erreicht.

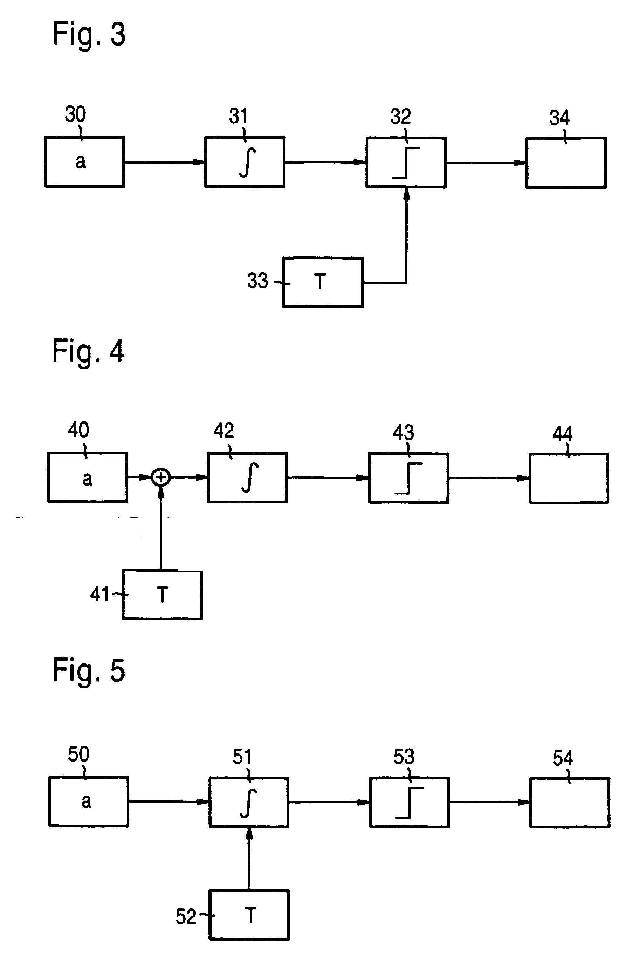

Figur 3 zeigt in einem ersten Ausfühmngsbeispiel, wie das erreicht wird. Im Block 30 wird mittels der Beschleunigungssensoren B das Bescheunigungssignal a erzeugt und einem Integrator 31 zugeführt, der beispielsweise im Steuergerät SG angeordnet ist. Der Integrator ist vorliegend als Softwarefunktion in einem Mikrocontroller implementiert. Es ist jedoch möglich, einen anderen Prozessortyp oder eine Hardwareschaltung auch analog dafür zu verwenden. Das so integrierte Beschleunigungssignal, beispielsweise durch eine Fensterintegration, wird einem Schwellwertentscheider 32 zugeführt, wobei die Schwelle in Abhängigkeit von der Umgebungstemperatur T aus dem Block 33 verändert wird. Wird die Schwelle überschritten, dann wird im Block 34 die Auslösung der aktiven Schutzmittel für Fußgänger vorgenommen Der Schwellwert im Schwellwertentscheider 32 kann auch in Abhängigkeit von weiteren Werten beispielsweise von der Beschleunigung a selbst vorgenommen werden. Auch weitere Parameter können hier Einfluss nehmen.

Figur 4 zeigt ein weiteres Ausführungsbeispiel der erfindungsgemäßen Vorrichtung. Im Block 40 wird durch die Beschleunigungssensoren B die Beschleunigung a ermittelt, wobei diesem Wert ein Summand in Abhängigkeit von der Temperatur T 41 aufaddiert wird, bevor das so modifizierte Signal einem Integrator 42 und einem Schwellwertentscheider 43 zugeführt wird, sodass danach im Block 44 entschieden wird, ob ein Auflösefall vorliegt.

Figur 5 zeigt ein weiteres Ausführungsbeispiel der erfindungsgemäßen Vorrichtung. Die Beschleunigung a im Block 50 wird durch die Beschleunigungssensoren B gemessen. Dies wird dem Integrator 51 zugeführt. Nunmehr wird jedoch im Integrator 51 in Abhängigkeit vom Block 52 also der Umgebungstemperatur Integrationsgrenzen bzw. die Fensterbreite bzw. die Fensterformen verändert, sodass das so erzeugte Signal in Abhängigkeit von der Temperatur verändert wird. Die Veränderungen sind vorwiegend nicht linear, sie können jedoch auch linear vorgenommen werden. Das so entstandene Signal kann dann dem Schwellwertentscheider 52 zugeführt, werden, wobei dann im Block 54 entschieden wird ob ein Auslösefall vorliegt oder nicht.

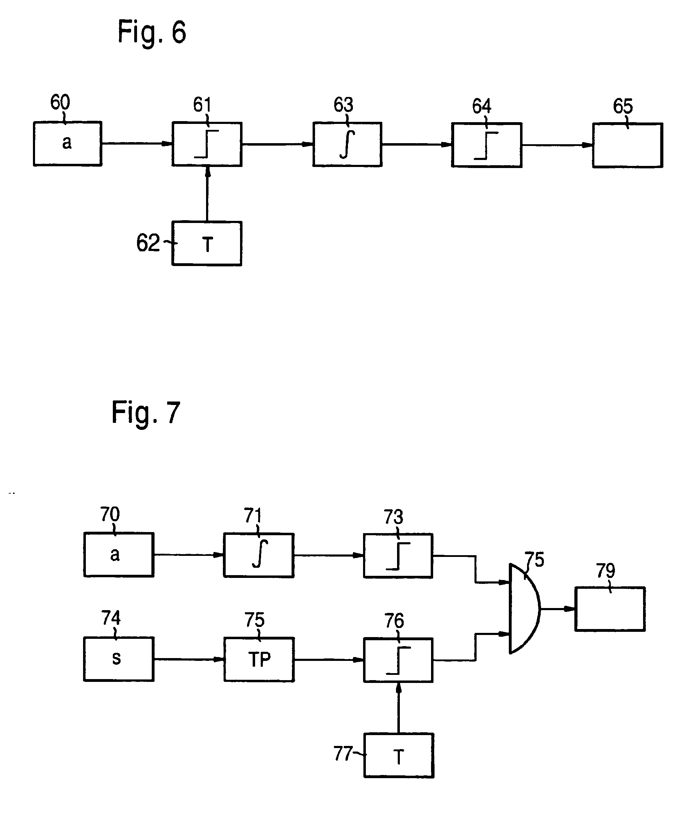

In Figur 6 wird ein weiteres Ausfühnmgsbeispiel der erfindungsgemäßen Vorrichtung vorgestellt Wiederum wird im Block 60 das Bescheunigungssignal a durch die Beschleunigungssensoren B ermittelt und einem Schwellwertentscheider 61 zugeführt, der hier eine Rauschschwelle darstellt. Diese Rauschschwelle wird in Abhängigkeit von der Temperatur T 62 verändert. Ist das Signal über der Rauschschwelle 61 dann wird aus einem Integrator 63 zugeführt, wobei das integrierte Signal dann dem Schwellwertentscheider 64 zugeführt wird, sodass im Block 65 entschieden werden kann, ob ein Auslösefall vorliegt.

Schließlich zeigt Figur 7 ein weiteres Ausfiihrungsbeispiel der erfindungsgemäßen Vorrichtung. Im Block 70 wird das Beschleunigungssignal a erzeugt und im Block 71 integriert und dann einem Schwellwertentscheider 73 zugeführt. Der Ausgang des Schwellwertentscheiders 73 wird einem Und-Gatter 78 zugeführt. Gleichzeitig wird ein Plausibilitätssignal S im Block 74 erzeugt. Dies kann durch die Beschleunigungssensorik selbst oder einer anderen Sensorik erzeugt werden. Dieses Signal wird hier beispielhaft für eine Signalverarbeitung einem Tiefpass 75 zugeführt, sodass dann das tiefpassgefilterte Signal S einem Schwellwertentscheider 76 zugeführt wird, dessen Schwellen in Abhängigkeit von der Umgebungstemperatur 77 verändert werden. Das Ausgangssignal des Schwellwertentscheiders 76 wird an den zweiten Eingang des Und-Gatter 78 geleitet, sodass das Und-Gatter 78 nur ein Auslösesignal im Block 79 ausgibt, wenn beide Signalpfade eine Schwellwertüberschreitung anzeigen. Die Schwellwertüberschreitung muss auch gleichzeitig erfolgen. Damit ist ein Plausibilitätspfad beschrieben.

Einem Fachmann ist klar, dass diese Ausführungsformen miteinander kombiniert werden können.

## Patentansprüche

1. Vorrichtung zur Aufprallerkennung mit einer Unfallsensorik (B) eines Fahrzeugs (10), wobei die Vorrichtung derart konfiguriert ist, dass die Vorrichtung bei einer Aufprallcharakterisierung in Abhängigkeit von einem Signal der Unfallsensorik (B) die Umgebungstemperatur (T) berücksichtigt, wobei die Unfallsensorik eine Beschleunigungssensorik (B) aufweist, die in der Stossfängerverkleidung eingebaut ist, **dadurch gekennzeichnet, dass** die Vorrichtung die Umgebungstemperatur (T) derart berücksichtigt, dass wenigstens ein Schwellwert, mit dem das Signal verglichen wird, in Abhängigkeit von der Umgebungstemperatur (T) verändert wird.

2. Vorrichtung nach Anspruch 1 **dadurch gekennzeichnet, dass** die Vorrichtung wenigstens einen Schwellwert nichtlinear in Abhängigkeit von der Umgebungstemperatur (T) verändert.

3. Vorrichtung nach Anspruch 1, **dadurch gekennzeichnet, dass** die Vorrichtung das Signal nach Abhängigkeit von der Umgebungstemperatur (T) modifiziert.

4. Vorrichtung nach Anspruch 3, **dadurch gekennzeichnet, dass** die Vorrichtung die Modifikation linear oder nichtlinear durchführt.

5. Vorrichtung nach Anspruch 1, **dadurch gekennzeichnet, dass** die Vorrichtung das Signal in Abhängigkeit von der Umgebungstemperatur (T) erzeugt.

6. Vorrichtung nach Anspruch 1, **dadurch gekennzeichnet, dass** die Vorrichtung das Signal mittels Fuzzy-Logik unter Berücksichtigung-der Umgebungstemperatur (T) klassifiziert.

7. Vorrichtung nach einem der vorherigen Ansprüche, **dadurch gekennzeichnet, dass** die Vorrichtung eine Rauschschwelle für das Signal in Abhängigkeit von der Umgebungstemperatur (T) verändert.

8. Vorrichtung nach einem der vorhergehenden Ansprüche; **dadurch gekennzeichnet, dass** die Vorrichtung ein Plausibilisierungssignal (s) bei der Beurteilung des Signals (a) in Abhängigkeit von der Umgebungstemperatur (T) berücksichtigt.

9. Vorrichtung nach einem der vorhergehenden Ansprüche, **dadurch gekennzeichnet, dass** die Vorrichtung als Fußgängerschutzsensorik ausgebildet ist.

10. Vorrichtung nach Anspruch 9, **dadurch gekennzeichnet, dass** die Vorrichtung mit einem Steuergerät (ABSG) zur Ansteuerung von Personenschutzmitteln koppelbar ist.

11. Vorrichtung nach Anspruch 1, **dadurch gekennzeichnet, dass** im Bereich der Stoßfängerverkleidung eine Temperatursensorik (T) zur Erfassung der Umgebungstemperatur vorgesehen ist.

## Claims

1. Collision detecting device having an accident sensor system (B) of a vehicle (10), wherein the device is configured in such a way that the device takes into account the ambient temperature (T) in a characterization of the impact as a function of a signal of the accident sensor system (B), wherein the accident sensor system has an acceleration sensor system (B) which is installed in the bumper trim, **characterized in that** the device takes into account the ambient temperature (T) in such a way that at least one threshold value with which the signal is compared is changed as a function of the ambient temperature (T).

2. Device according to Claim 1, **characterized in that** the device changes at least one threshold value non-linearly as a function of the ambient temperature (T).

3. Device according to Claim 1, **characterized in that** the device modifies the signal as a function of the ambient temperature (T).

4. Device according to Claim 3, **characterized in that** the device carries out the modification linearly or non-linearly.

5. Device according to Claim 1, **characterized in that** the device generates the signal as a function of the ambient temperature (T).

6. Device according to Claim 1, **characterized in that** the device classifies the signal by means of fuzzy logic taking into account the ambient temperature (T).

7. Device according to one of the preceding claims, **characterized in that** the device changes a noise threshold for the signal as a function of the ambient temperature (T).

8. Device according to one of the preceding claims, **characterized in that** the device takes into account a plausibility-checking signal (s) in the assessment of the signal (a) as a function of the ambient temperature (T).

9. Device according to one of the preceding claims, **characterized in that** the device is embodied as a pedestrian protection sensor system.

10. Device according to Claim 9, **characterized in that** the device can be coupled to a control unit (ABSG) for actuating vehicle occupant protection means.

11. Device according to Claim 1, **characterized in that** a temperature sensor system (T) for detecting the ambient temperature is provided in the region of the bumper trim.

## Revendications

1. Dispositif de détection de collision, doté d'un ensemble (B) de détecteurs d'accident placés sur un véhicule (10), le dispositif étant configuré de telle sorte que le dispositif tient compte de la température ambiante (T) lorsqu'il caractérise une collision en fonction d'un signal de l'ensemble (B) de détecteurs d'accident, l'ensemble de détecteurs d'accident présentant un ensemble (B) de détecteurs d'accélération incorporés dans l'habillage de pare-chocs, **caractérisé en ce que**
le dispositif tient compte de la température ambiante (T) en modifiant en fonction de la température ambiante (T) au moins une valeur de seuil à laquelle le signal est comparé.

2. Dispositif selon la revendication 1, **caractérisé en ce que** le dispositif modifie au moins une valeur de seuil de manière non linéaire en fonction de la température ambiante (T).

3. Dispositif selon la revendication 1, **caractérisé en ce que** le dispositif modifie le signal en fonction de la température ambiante (T).

4. Dispositif selon la revendication 3, **caractérisé en ce que** le dispositif exécute des modifications linéaires ou non linéaires.

5. Dispositif selon la revendication 1, **caractérisé en ce que** le dispositif forme le signal en fonction de la température ambiante (T).

6. Dispositif selon la revendication 1, **caractérisé en ce que** le dispositif classe le signal à l'aide d'une logique floue qui tient compte de la température ambiante (T).

7. Dispositif selon l'une des revendications précédentes, **caractérisé en ce que** le dispositif modifie un seuil de bruit du signal en fonction de la température ambiante (T).

8. Dispositif selon l'une des revendications précédentes, **caractérisé en ce que** lors de l'évaluation du signal (a) en fonction de la température ambiante (T), le dispositif tient compte d'un signal de plausibilité (s).

9. Dispositif selon l'une des revendications précédentes, **caractérisé en ce que** le dispositif est configuré comme ensemble de détecteurs pour la protection des piétons.

10. Dispositif selon la revendication 9, **caractérisé en ce que** le dispositif peut être couplé à un appareil de commande (ABSG) qui commande des moyens de protection des personnes.

11. Dispositif selon la revendication 1, **caractérisé en ce qu'**un ensemble (T) de sondes de température qui détectent la température ambiante est prévu dans la zone occupée par l'habillage de pare-chocs.
